# EUROPEAN PATENT SPECIFICATION

(11) **EP 1 313 821 B1**
(45) Date of publication and mention of the grant of the patent: **09.01.2013**
(21) Application number: 00954817.3
(22) Date of filing: 31.08.2000
(51) Int. Cl.: C09K 3/14, B24D 3/00

(54) **METHOD FOR THE MANUFACTURE OF AN ABRASIVE MATERIAL COMPRISING ELONGATE ABRASIVE BODIES**
VERFAHREN ZUR HERSTELLUNG VON SCHLEIFMITTEL AUS LANGGESTRECKTEN SCHLEIFKÖRPERN
MÉTHODE DE PRÉPARATION DE MATIÈRE ABRASIVE COMPRENANT DES CORPS ABRASIFS ALLONGÉS

(30) Priority: 31.08.1999 ZA 9905585
(43) Date of publication of application: 28.05.2003
(60) Divisional application: 07075408.0
(73) Proprietor: Element Six Abrasives S.A., 2763 Luxembourg (LU)
(72) Inventor: FRIES, Robert, 2000 Johannesburg (ZA); JONKER, Cornelis, Roelof, Pretoria (ZA); SIGALAS, Iakovos, 2195 Linden (ZA); BROWN, Peter, William, Reading, Berkshire RG4 8PQ (GB)
(74) Representative: Carpmaels & Ransford
(86) International application number: PCT/IB2000/001215
(87) International publication number: WO 2001/016249

(56) References cited:
- WO-A-95/03370
- US-A- 4 776 861
- US-A- 4 923 490
- US-A- 5 009 676
- US-A- 5 466 269
- US-A- 5 738 696

## Description

This invention relates to a method of production of an abrasive material comprising a mass of coherent elongate abrasive bodies.

Superhard abrasive bodies in the form of either abrasive compacts or individual crystals are well known and established in the art. The abrasive compact will generally be a diamond compact, also known as polycrystalline diamond or PCD, or a cubic boron nitride compact, also known as polycrystalline cubic boron nitride or PCBN. These abrasive compacts have wide application in cutting, drilling, boring, milling and other abrasive or cutting operations.

Bonding of superhard abrasives is created under conditions of elevated temperature and pressure at which the ultra-hard component is crystallographically stable. Polycrystalline diamond or polycrystalline cubic boron nitride can be produced with or without a second phase of bonding matrix. The second phase, when provided, may be, in the case of diamond, a catalyst/solvent such as cobalt, or it may be a carbide-forming element such as silicon. Similar sintering mechanisms are utilised in PCBN synthesis with various carbides, nitrides and borides being common second phases. Abrasive compacts are generally produced in the form of a disc, either freestanding or bonded to a support, which may be cut into smaller segments for use.

Single crystal superhard abrasives in the form of either diamond or cubic boron nitride crystals, also referred to as "grit", are used in loose or bonded form for a variety of abrasive applications such as lapping, drilling, grinding and sawing. Examples include grinding wheels and saw segments. Bond types for such abrasives can be a metal resin or a ceramic.

Diamond or cubic boron nitride grits are typically produced through a high pressure/high temperature process where graphite or hexagonal boron nitride are converted in the presence of a suitable catalyst to, respectively, diamond or cubic boron nitride. In some cases natural diamond crystals are also employed.

The concepts of abrasive compacts and grits have been combined and led to the development of polycrystalline grits. For instance US Patent No 4,776,861 describes a process for generating polycrystalline grit containing ultra-hard material. This is achieved by leaching non diamond material from polycrystalline diamond or cubic boron nitride compacts obtained through a high pressure/high temperature process and subsequent crushing.

Other known polycrystalline grits are those obtained through conventional low pressure ceramic processes. In particular, aluminium oxide based materials have been reported in the prior art. Such materials are typically made by conventional pressureless ceramic sintering and subsequent crushing. A more sophisticated processing route for instance via a sol-gel approach is disclosed in US Patent No 4,623,364. In this case the dried gel is crushed before pressureless sintering to achieve the polycrystalline grit. Alternatively, shaping operations such as pressing, moulding or extrusion are suggested. Subsequently the sol-gel technology has been further developed to generate polycrystalline abrasives in the shape of filaments with a high aspect ratio (e.g US Patent No 5,009,676). The process consists of a sol-gel process using hydrated alumina where the gel is extruded or spun into the desired filaments and subsequently sintered using a conventional pressureless ceramics heat treatment. A possible application and some associated advantages of alumina abrasives in the shape of filaments are disclosed in US Patent No 5,738.696**.** In this reference it is disclosed that a wheel containing filaments rather than grit is sharper, has more bond points per particle and hence an improved particle retention, and is easier to permeate by coolant.

### SUMMARY OF THE INVENTION

According to the invention there is provided a method of producing a plurality of elongate polycrystalline abrasive bodies each comprising a mass of ultra-hard abrasive particles bonded into a coherent form, including the steps of:
(1) providing a mixture of:
   (a) a mass of uttra-hard abrasive particles or a precursor of such a particle wherein the ultra-hard abrasive particles are selected from the group consisting of diamond and cubic boron nitride;
   (b) optionally a second phase; and
   (c) a paste forming agent;
      the mixture having a paste-like consistency;
(2) forming the mixture into an assembly comprising a plurality of elongate unsintered bodies. each elongate unsintered body being separated from its neighbours by a separating medium, wherein the separating medium is selected from the group consisting of a metal powder,salt,graphite, hexagonal boron nitride, a carbonate and an oxide,
(3) placing the assembly of step (2) in a reaction zone of a high temperature/high pressure apparatus and subjecting the product of step (2) to conditions of elevated temperature and pressure at which the ultra-hard abrasive particles are crystallographically stable to sinter the elongate unsintered bodies; and
(4) recovering the elongate polycrystalline abrasive bodies from the separating medium.

In step (2), each elongate unsintered body may be formed by extrusion.

In step (2), the separating medium is preferably co-extruded with the mixture in producing each elongate unsintered body.

More preferably, in step (2), the extrusion or co-extrusion takes place through a die of decreasing cross-section. Laminar flow occurs during the extrusion.

The assembly comprising a plurality of elongate unsintered bodies may be formed by providing each body with a coating of separating medium and then bundling the unsintered bodies together. Alternatively, the assembly may be produced by providing a body of separating medium having a plurality of holes formed therein and introducing an elongate unsintered body into each hole.

In the assembly, the plurality of elongate unsintered bodies are preferably parallel to one another and separated from one another by the separating medium.

The assembly comprising a plurality of elongate unsintered bodies is preferably extruded through a die of decreasing cross-section. This has the effect of decreasing the cross-section of the assembly and of each of the elongate unsintered bodies.

Thus, in step (1), component (a) may be a mass of diamond particles. In this case, component (b) may be selected from the group consisting of a metal catalyst such as cobalt, nickel, iron or manganese in which case there is produced a sintered, intergrown polycrystalline diamond body; a carbide forming metal such as silicon or titanium in which case there is produced a sintered, polycrystalline diamond/silicon carbide or titanium carbide composite body; and an oxide such as alumina, in which case there is produced a sintered composite body of diamond and the oxide and mixtures thereof.

In step (1), component (a) may also be a precursor of diamond such as graphite or amorphous carbon. In this case, component (b) may be selected from a group consisting of a metal catalyst as defined above or a metal catalyst in combination with a carbide forming metal or an oxide.

Alternatively, in step (1), component (a) may be a mass of cubic boron nitride particles. In this case, component (b) may be selected from a transition metal such as cobalt, nickel, iron or manganese in which case there is produced a sintered, intergrown polycrystalline cubic boron nitride body; a boride or nitride forming metal such as aluminium, titanium, zirconium, hafnium, tantalum, molybdenum, niobium, chromium and tungsten or mixtures thereof, used either in metallic form or as a substoichiometric or stoichiometric carbide, boride or nitride, in which case there is produced a sintered polycrystalline cubic boron nitride/metal boride or nitride or carbide or carbonitride composite body; an oxide such as alumina in which case there is produced a sintered composite body of cubic boron nitride and the oxide; and a cubic boron nitirde catalyst such as magnesium, lithium or calcium in either metallic form, as a nitride, or in the form of a boron nitride in which case there is produced a sintered, intergrown polycrystalline cubic boron nitride body.

In step (1), component (a) may be a precursor of cubic boron nitride, e.g hexagonal boron nitride. In this case, component (b) may be a cubic boron nitride catalyst alone or in combination with a transition metal, a boride or nitride forming metal or an oxide such as alumina.

It is preferred that component (b) is present in the mixture.

In step (1) component (c) is preferably an organic binder such as polyethylene, polyvinyl alcohol, polyvinyl butyral and cellulose. Component (c) may also simply comprise a liquid such as water where this is sufficient to form a paste with the particles concerned. Compound (c) is preferably chosen to provide the plasticity necessary to effect laminar flow during extrusion and green strength to the extrudate after extrusion.

The separating medium used in step (2), particularly when the step comprises extrusion, must be co-extrudable with the mixture containing the ultra-hard abrasive particles, must transmit pressure adequately onto the unsintered elongate abrasive bodies, must be relatively inert towards the unsintered elongate abrasive bodies (or to the chemical barrier layer where such is used as is described hereinafter) and must be separable from the sintered elongate abrasive bodies in step (4).

The separating medium is preferably selected from the group consisting of a metal powder, salt, graphite, hexagonal boron nitride, carbonate such as calcium carbonate, oxides such as titanium oxide or magnesium oxide.

In a preferred method of the invention, the separating medium is calcium carbonate.

As indicated above, a chemical barrier layer may be placed between the elongate unsintered bodies and the separating medium, to prevent reaction between the elongate unsintered bodies and the separating medium. Suitable materials for use in forming the chemical barrier layer include refractory metals such as niobium, molybdenum, tantalum, titanium and the other refractory metals.

When step (2) comprises extrusion to form each elongate unsintered body, the chemical barrier layer may be co-extruded with the mixture and the separating medium.

After step (2), the elongate unsintered bodies, surrounded and separated by the separating medium may be allowed to solidify, for example by loss of any solvent present or by decrease in temperature of the elongate unsintered bodies and the separating medium, to give a product which is a rigid body of high green strength, consisting of a mass of elongate unsintered bodies aligned substantially parallel to each other and separated from each other by the separating medium.

Further before step (3), it is preferred to remove some or preferably most of the paste forming agent, particularly where this is an organic binder. This may be achieved by pressureless heat treatment which can vary in atmosphere and temperature. Typical conditions include a temperature of 500°C in an argon atmosphere or 400°C in air. A slow heating cycle is desirable to allow the paste forming agent to be removed at a reasonable rate to preserve the integrity of the elongate unsintered bodies.

The elongate unsintered bodies may optionally be densified prior to or subsequent to removal of the paste forming agent, for example through uniaxial compaction or cold isostatic pressing.

In step (3) the assembly of step (2) is placed in a reaction zone of a conventional high temperature/high pressure apparatus and subjected to conditions of elevated temperature and pressure at which the ultra-hard abrasive particles are crystallographically stable and which conditions are sufficient to effect densification and sintering of the elongate bodies. Such conditions are known in the art and are typically pressures of the order of from 3 to 7 GPa inclusive, and temperatures of the order of from 1000°C to 1700°C inclusive.

During this step the elongate shape of the elongate bodies must be preserved.

In step (4), the elongate polycrystalline abrasive bodies are recovered from the separating medium. Depending on the nature of the interaction between the separating medium, any chemical barrier layer which may be present, and the elongate abrasive bodies, different procedures may be used. For example, when the separating medium is salt, this may be removed by simple dissolution in water, if necessary assisted by ultrasonic dispersion.

For other separating media, acid leaching or fusion e.g dissolution in molten sodium hydroxide, may be required to recover the sintered elongate abrasive bodies.

### BRIEF DESCRIPTION OF THE DRAWINGS

Figure 1 is a sectional plan view of a billet suitable for producing an elongate unsintered body,
Figure 2 is a plan view of an assembly of elongate unsintered bodies,
Figure 3 is a sectional side view of an extrusion die, and
Figure 4 is a sectional side view of the assembly being extruded through an extrusion die.

### DESCRIPTION OF EMBODIMENTS

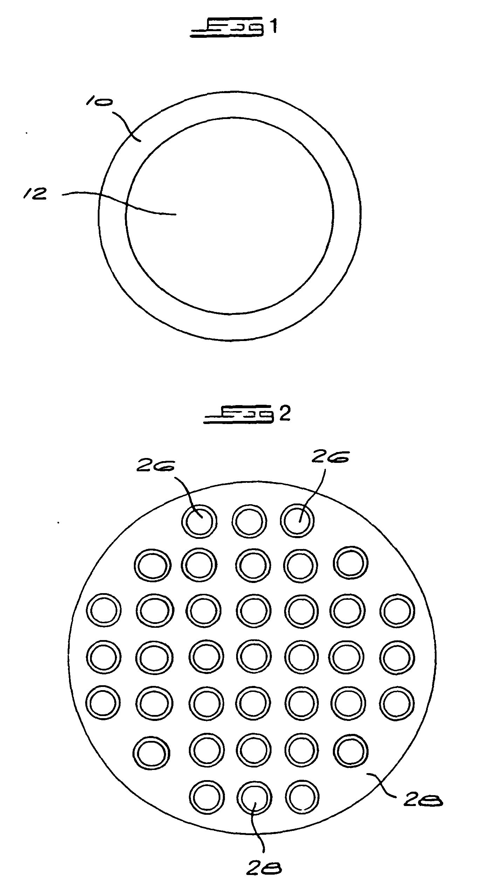

An embodiment of the invention will now be described with reference to the accompanying drawings. Referring first to Figure 1, there is shown a billet suitable for producing an elongate unsintered body. The billet comprises an outer sleeve 10 into which is packed a reaction mass 12. The sleeve 10 may be made of the separating medium, for example salt, graphite, hexagonal boron nitride, a carbonate or an oxide bonded into a coherent form by means of a binder such as an organic binder. The sleeve 10 may also consist of an inner layer of a powdered refractory metal such as titanium, tantalum, molybdenum or niobium or a mixture thereof bonded into a coherent form by means of a binder such as an organic binder and an outer layer consisting of the separating medium bonded into a coherent form by means of a binder such as an organic binder. The reaction mass consists of a mixture of ultra-hard abrasive particles or precursor particles and a second phase, when used, in a binder as a paste-forming agent. The mixture is paste-like.

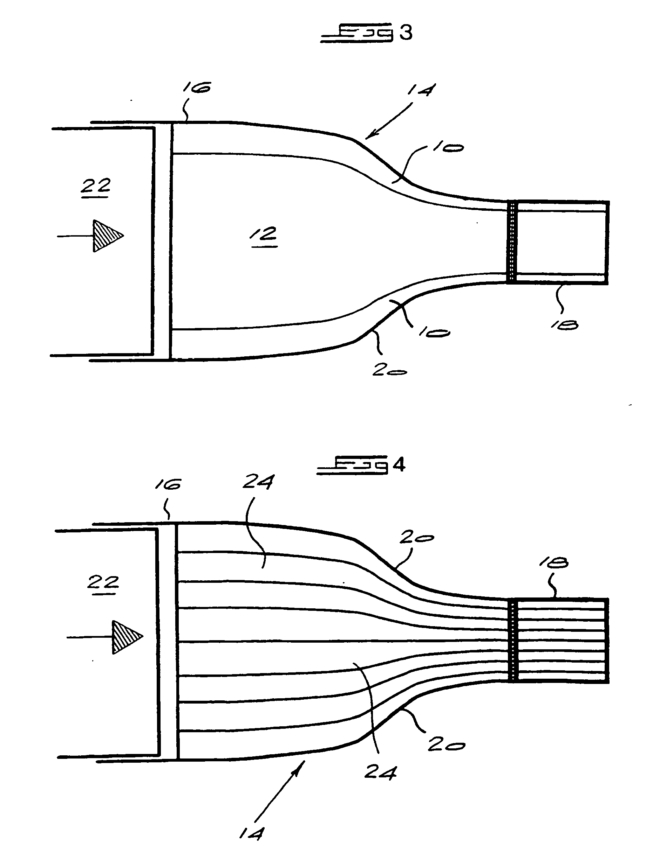

The billet of Figure 1 is then reduced in diameter by extruding it through die 14 (see Figure 3). The die 14 has a region of wide diameter 16 leading to a region 18 of narrow diameter through a region 20 of decreasing diameter. The decrease in diameter should be gradual so as to permit for laminar flow. Plunger 22 is used to force the billet through the die thereby reducing its diameter to that of the region 18. Laminar flow is achieved during extrusion.

A plurality of the extruded elongate unsintered bodies is produced by extrusion through the die 14 and these are then formed into a bundle. The bundle is then reintroduced into the die 14 and extruded through the narrow region 18, as illustrated by Figure 4. This extrusion has the effect of decreasing further the cross-section of each elongate body 24. The formation of an assembly and extrusion can be repeated to reduce further the cross-section of each elongate body 24. Repeated bundling and extrusion of billets changes the cross sectional shape of the extruded unsintered elongate bodies from round to more irregular.

Instead of producing a bundle of elongate unsintered bodies, an alternative assembly of these bodies may be produced as shown in Figure 2. Referring to this Figure, the assembly comprises a plurality of elongate unsintered bodies 26 located in a supporting medium 28 which will typically be salt or any of the other separating media mentioned above, in an organic binder. Each elongate unsintered body 26 is parallel to its neighbour and spaced from its neighbour by the separating medium 28. The assembly of Figure 2 may then be introduced into the die 14 and extruded through the narrow region 18, as described above with reference to Figure 4.

It will be noted that in the embodiments described above, the elongate unsintered bodies are all parallel to one another in the assembly and are separated from one another by separating medium or by separating medium and chemical barrier layer.

Before subjecting the extruded assembly of decreased-cross section to the required conditions of elevated temperature and pressure, the organic binder is, to the extent necessary, removed, preferably by a pressureless heat treatment. The unsintered elongate bodies may then be optionally densified prior to or subsequent to organic binder removal, for instance through uniaxial compaction or cold isostatic pressing.

The extruded assembly of decreased cross-section is then placed in the reaction zone of a conventional high temperature/high pressure apparatus. The assembly is subjected to elevated temperature and pressure conditions at which the abrasive particle is crystallographically stable. This has the effect of producing a sintered abrasive body from each elongate unsintered body. A plurality of such abrasive bodies may be recovered using conventional techniques.

The elongate abrasive bodies described above have a high aspect ratio, i.e. a length much greater than the cross-section or diameter. For example, fibre or needle-shaped abrasive bodies can be produced which have an average aspect ratio of 1.5, preferably 3, more preferably 5 and greater, and a diameter of from 0,01 mm to 3,0 mm, with lengths of from 0,015 mm to 60 mm.

The cross sections of the elongate abrasive bodies of the invention can vary from circular to irregular in shape depending on manufacturing route and the number of consecutive extrusions. Elongate abrasive bodies of other controlled cross sections can also be produced.

The elongate bodies are well sintered and abrasion resistant and typically have a hardness greater than 25 GPa. The bodies obtained according to the method of the invention are significantly harder and more abrasion resistant than fibres produced from conventional ceramic materials. The high aspect ratio results in a number of advantages over conventional abrasive bodies. Elongate abrasive bodies have a better bond retention due to a high bonding surface per particle. This facilitates the use of less bonding phase resulting for example, in a more porous wheel that can more readily be cooled such that higher speeds are attainable. Finally the elongate bodies can be well oriented in a tool and the degree of self sharpening and free cutting can be tailored for any given polycrystalline material through the diameter and aspect ratio of the elongate abrasive bodies.

Various examples of the invention will now be given.

### Example 1

A blend of 30 volume percent c-BN (approximate mean diameter 3 microns) and 70 volume percent Al₂O₃ powder (approximate mean diameter 0.5 microns) was formulated into an extrudable paste using a water soluble cellulose binder and a z-blade mixer for homogenisation. Second, a similar paste was prepared from h-BN powder. The water and binder content of the pastes were individually adjusted such that the flow properties of the two pastes were matched.

For extrusion, a ram type extrusion die set for use with a hydraulic press was used. The design of the system is such that 7 extruded sections could be fitted into the die-barrel for repeated iterations. This translates to a 1:3 cross-sectional reduction ratio per iteration.

The co-extrusion pre-form was formed by wrapping a core of approximately 30 mm diameter of the c-BN- Al₂O₃ composite paste mixture with a sleeve of h-BN paste of approximately 7 mm thickness, as the separating medium.

After three extrusion iterations wherein the co-extruded sections were bundled together and re-extruded, a structure with an average diameter of 1.5 to 2 mm diameter of the unsintered elongate abrasive bodies was arrived at.

Organic binder removal of the extruded assembly was achieved by heat treatment of the co-extruded structures at 400°C for 2 hours in air. The co-extruded assembly was then loaded into a metal canister. The container was loaded into the reaction capsule of a standard high pressure/high temperature apparatus and the loaded capsules placed into the reaction centre of this apparatus. The contents of the capsule were exposed to a temperature of approximately 1450°C and a pressure of 50 kbar. These conditions were maintained for 10 minutes. After completion of the treatment the sintered assembly was recovered from the canister and placed in an ultrasonic bath filled with water. After a few minutes of sonification, sintered cubic boron nitride/alumina elongate bodies or needles of 1 - 1.5 mm diameter and approximately 20 mm length, (i.e. an aspect ratio of from 13 to 20) separate from the h-BN powder separating medium, were recovered. The elongate abrasive bodies were well sintered and abrasion resistant.

### Example 2

The procedure described in Example 1 was repeated with an additional extrusion iteration. This resulted in an approximate diameter of the unsintered elongate abrasive bodies of approximate 0.5 mm. After taking the unsintered extruded assembly through the same outgassing cycle, high pressure/high temperature treatment and recovery procedure, it was found that more breakage occurred in the elongate abrasive bodies than seen for the coarser structure, and the ultrasonic treatment alone was not sufficient to completely separate the elongate abrasive bodies from the separating medium.

### Example 3

In order to evaluate the interactions of various abrasive materials with chemical barrier layers and separating media, a matrix of experiments was performed. Pellets of the respective powdered materials were uniaxially compacted, and brought into contact with each other. The material combinations were loaded into metal canisters and subjected to the same high pressure/high temperature treatment as described in Example 1. The results are summarised in the Table below.

| **Abrasive/ Second phase** | **Barrier layer** | **Separating Medium** | **Comments** |
|---|---|---|---|
| c-BN/Al₂O₃ | | Graphite | No visible reaction |
| c-BN/Al₂O₃ | | h-BN | No visible reaction |
| c-BN/Al₂O₃ | | NaCl | Reaction layer/poorly sintered abrasive |
| c-BN/Al₂O₃ | | h-BN/salt | Reaction layer/poorly sintered abrasive |
| c-BN/TiC/Al | | Pyrophilite | Thin reaction layer |
| c-BN/TiC/Al | | MgO | Reaction layer/strong bond |
| c-BN/TiC/Al | | TiO₂ | Thin reaction layer |
| c-BN/TiC/Al | | h-BN | No visible reaction |
| c-BN/TiC/Al | | CaCO₃ | Reaction layer |
| c-BN/TiC/Al | Molybdenum | MgO | No visible reaction |
| c-BN/Al | | Pyrophilite | Reaction layer |
| c-BN/Al | | MgO | Reaction layer |
| c-BN/Al | | TiO₂ | No visible reaction/strong bond |
| c-BN/Al | | h-BN | No visible reaction |
| c-BN/Al | | CaCO₃ | No visible reaction |
| Diamond/Co | Molybdenum | h-BN | No visible reaction |
| Diamond/Co | Molybdenum | NaCl | No visible reaction |

### Example 4

A blend of 90 weight percent c-BN (approximate mean diameter 15 microns) and 10 weight percent aluminium powder was formulated into an extrudable paste using a themoplastic wax-based binder and a z-blade mixer for homogenisation. Second, a similar paste was prepared from calcium carbonate powder and the same binder. The binder contents of the pastes were individually adjusted such that the flow properties of the two pastes, were matched.

A co-extruded blank was formed by wrapping a core of the c-BN- aluminium paste of approximately 30 mm diameter with a 7 mm thick sleeve of calcium carbonate paste.

After four extrusion iterations wherein the co-extruded sections were bundled together and re-extruded, a structure with an average diameter of 0.5 to 0.7 mm of the unsintered elongate abrasive bodies was arrived at.

Binder removal of the extruded assembly was achieved by heat treatment of the co-extruded assemblies at 500°C for 2 hours in argon. The co-extruded structure was then loaded into a metal canister. The container was loaded into the reaction capsule of a standard high pressure/high temperature apparatus and the loaded capsules placed into the reaction centre of this apparatus. The contents of the capsule were exposed to a temperature of approximately 1200°C and a pressure of 45 kbar. These conditions were maintained for 10 minutes. After completion of the treatment the sintered assembly was recovered from the canister and placed into a 6% HCl solution at 70°C. After approximately 30 minutes, sintered polycrystalline cubic boron nitride elongate abrasive bodies of approximately 0.5 mm average diameter and approximately 20 mm length (i.e an aspect ratio of 40), were recovered. The elongate abrasive bodies showed some leaching of the aluminium boride/aluminium nitride phase near the surface of the needles, but were well sintered and abrasion resistant.

### Example 5

The procedure described in Example 4 was repeated with an additional extrusion iteration. This resulted in an approximate diameter of the unsintered elongate abrasive bodies of approximately 0.2 mm. After taking the unsintered extruded assembly through the same removal of binder cycle, high pressure/high temperature treatment and recovery procedure, it was found that the elongate abrasive bodies did not separate from the carbonate phase and that some bridging between neighbouring elongate abrasive bodies occurred. Prolonged acid leaching led to dissolution of the elongate abrasive bodies.

### Example 6

The procedure described in Example 5 was repeated with the following alterations. The diameter of the original c-BN/aluminium core was reduced to approximately 25mm and the thickness of the calcium carbonate paste wrap was increased to approximately 10 mm. Acid leaching was performed in acetic acid at room temperature for 4 hours. After completion of the recovery procedure sintered polycrystalline cubic boron nitride elongate abrasive bodies of 0.1 - 0.25 mm diameter and approximately 20 mm length (i.e. an aspect ratio of 80 to 200), were recovered. The elongate abrasive bodies showed very little leaching of the aluminium boride/aluminium nitride phase near the surface and were well sintered and abrasion resistant.

### Example 7

The materials described in Example 4 were used to explore a different manufacturing route. An extrusion blank of 23 mm diameter consisting of a calcium carbonate paste separation medium incorporating 4 spaced cylinders of 6 mm diameter of the c-BN aluminium paste was prepared. The blanks were extruded through a nozzle with a 15:1 reduction ratio to produce continuous strands of 1.5 mm diameter containing four filaments of approximately 0.4 mm diameter. Using a computer-aided deposition technique the strands were deposited to form a cylindrical blank with the filaments oriented horizontally and parallel to each other which was subsequently machined to an outer diameter of 23 mm. Binder removal of the cylindrical blank was as described in Example 4. Following cold isostatic precompaction, the samples were loaded into a metal canister and taken through the same high pressure/high temperature treatment as described in Example 4. The recovery procedure was as described in Example 6. Well sintered, abrasion resistant elongate abrasive bodies of approximately 0.25 mm diameter and length varying from 1 to 20 mm (i.e. an aspect ratio of 4 to 80), were recovered.

### Example 8

A blend of 80 weight percent diamond (approximate mean diameter 10 microns) and 20 weight percent cobalt powder as a second phase was formulated into an extrudable paste using a wax based thermoplastic binder and a z-blade mixer for homogenisaiton. A similar paste was prepared from h-BN and molybdenum powder, respectively. The binder contents of all pastes were individually adjusted such that the flow properties of the pastes were matched.

The extrusion assembly was the same as described in Example 1.

The co-extrusion blank was formed by wrapping a 28 mm diameter core of the diamond/cobalt paste with an approximately 1 mm thick sleeve of molybdenum paste as a chemical barrier layer, and an outer sleeve of approximately 7 mm thickness of h-BN paste as a separating medium.

After three extrusion iterations wherein the co-extruded sections were bundled together and re-extruded, a structure with an average diameter of 1.5 to 2 mm diameter of the unsintered elongate abrasive bodies was arrived at.

Binder removal of the extruded assembly was achieved by pre-outgassing of the co-extruded structures at 500°C for 2 hours in argon. The co-extruded structure was then loaded into a metal canister. The container was loaded into the reaction capsule of a standard high pressure/high temperature apparatus and the loaded capsules placed into the reaction centre of this apparatus. The contents of the capsule were exposed to a temperature of approximately 1450°C and a pressure of 50 kbar. These conditions were maintained for 10 minutes. After completion of the treatment the sintered assembly was recovered from the canister and placed in an ultrasonic bath filled with water. After a few minutes of sonification sintered polycrystalline diamond elongate bodies of 1 - 1.5 mm diameter and approximately 20 mm length (i.e. an aspect ratio of 13 to 20). surrounded by thin layers consisting predominantly of molybdenum metal and some molybdenum carbide, separate from the h-BN powder, were recovered. The elongate abrasive bodies were well sintered and abrasion resistant.

## Claims

1. A method of producing a plurality of elongate polycrystalline abrasive bodies each comprising a mass of ultra-hard abrasive particles bonded into a coherent form, including the steps of:
(1) providing a mixture of:
(a) a mass of ultra-hard abrasive particles or a precursor of such a particle wherein the ultra-hard abrasive particles are selected from the group consisting of diamond and cubic boron nitride ;
(b) optionally a second phase; and
(c) a paste forming agent;
the mixture having a paste-like consistency;
(2) forming the mixture into an assembly comprising a plurality of elongate unsintered bodies, each elongate unsintered body being separated from its neighbours by a separating medim wherein the separating medium is selected from the group consisting of a metal powder, salt, graphite, hexagonal boron nitride, a carbonate, and an oxide ;
(3) placing the assembly of step (2) in a reaction zone of a high/temperature/high pressure apparatus and subjecting the product of step (2) to conditions of elevated temperature and pressure at which the ultra-hard abrasive particles are crystallographically stable to sinter the elongate unsintered bodies; and
(4) recovering the elongate polycrystalline abrasive bodies from the separating medium.

2. A method according to claim 1 wherein in step (2) each elongate unsintered body is formed by extrusion.

3. A method according to claim 2 wherein in step (2) the separating medium is co-extruded with the mixture in producing each elongate unsintered body.

4. A method according to claim 2 or claim 3 wherein in step (2) the extrusion or co-extrusion takes place through a die of decreasing cross-section.

5. A method according to any one of claims 4 to 14 wherein the assembly is formed by bundling a plurality of elongate unsintered bodies.

6. A method according to claim 5 wherein the elongate unsintered bodies are parallel to one another.

7. A method according to any one of claims 1 to 4 wherein the assembly in step (2) is formed by providing a body of separating medium having a plurality of holes formed therein and placing an elongate unsintered body in each hole.

8. A method according to claim 17 wherein the holes in the body are parallell to one another.

9. A method according to any one of claims 5 to 8 wherein the assembly is extruded through a die of decreasing cross-section before step (3).

10. A method according to any one of claims 1 to 9 wherein in step (1) component (a) is selected from the group consisting of a mass of diamond particles and a precursor of diamond selected from the group consisting of graphite and amorphous carbon and a second phase is present in the mixture.

11. A method according to any one of claims 1 to 9 wherein in step (1) component (a) is selected from the group consisting of a mass of cubic boron nitride particles and a precursor of cubic boron nitride and a second phase is present in the mixture.

12. A method according to any one of claims 1 to 11 wherein in step (1) component (c) comprises an organic binder.

13. A method according to any one of claims 1 to 12 wherein the separating medium is calcium carbonate.

14. A method according to any one of claims 1 to 13 a chemical barrier layer is placed between each elongate unsintered body and the separating medium**.**

15. A method according to any one of claims 12 to 14 wherein prior to step (3) some or all of the organic binder is removed.

16. A method according to any one of claims 1 to 15 wherein in step (3) the conditions of elevated temperature and pressure comprise a pressure of from 3 to 7 GPa inclusive and a temperature of from 1000°C to 1700°C inclusive.

## Patentansprüche

1. Ein Verfahren zum Herstellen einer Mehrzahl länglicher polykristalliner abrasiver Körper, die jeweils eine Masse aus ultraharten abrasiven Partikeln aufweisen, welche zu einer kohärenten Form verbunden sind, umfassend die Schritte:
(1) Bereitstellen einer Mischung von :
(a) einer Masse ultraharter abrasiver Partikel oder eines Precursors eines solchen Partikels, wobei die ultraharten abrasiven Partikel ausgewählt sind aus der Gruppe, die aus Diamant und kubischem Bornitrid besteht,
(b) optional einer zweiten Phase ; und
(c) einem pastenbildenden Mitteln;
wobei die Mischung eine pastenähnliche Konsistenz hat;
(2) Formen der Mischung in eine Zusammensetzung umfassend eine Mehrzahl länglicher ungesinterter Körper, wobei jeder längliche ungesinterte Körper von seinem Nachbarn durch ein Trennmedium getrennt ist, wobei das Trennmedium ausgewählt ist aus der Gruppe, die besteht aus Metallpulver, Salz, Grafit, hexagonalem Bornitrid, einem Karbonat und einem Oxid;
(3) Anordnen der Zusammensetzung aus Schritt (2) in einer Reaktionszone einer Hochtemperatur/Hochdruck-Vorrichtung und Aussetzen des Produktes aus Schritt (2) Bedingungen erhöhter Temperatur und erhöhten Druckes, bei welchen die ultraharten abrasiven Partikel kristallographisch stabil sind, um die länglichen ungesintertern Körper zu sintern; und
(4) Rückgewinnen der länglichen polykristallinen abrasiven Körper aus dem Trennmedium.

2. Ein Verfahren nach Anspruch 1, wobei in Schritt (2) jeder längliche ungesinterte Körper durch Extrusion gebildet wird.

3. Ein Verfahren nach Anspruch 3, wobei in Schritt (2) das Trennmedium beim Produzieren jedes länglichen ungesinterten Körpers mit der Mischung koextrudiert wird.

4. Ein Verfahren nach Anspruch 2 oder Anspruch 3, wobei in Schritt (2) die Extrusion oder Koextrusion durch eine Form mit sich verkleinerndem Querschnitt erfolgt.

5. Ein Verfahren nach einem der Ansprüche 1 bis 4, wobei die Zusammensetzung durch Bündelung einer Mehrzahl länglicher ungesinterter Körper gebildet wird.

6. Ein Verfahren nach Anspruch 5, wobei die länglichen ungesinterten Körper parallel zueinander vorliegen.

7. Ein Verfahren nach einem der Ansprüche 1 bis 4, wobei die Zusammensetzung in Schritt (2) gebildet wird, indem ein Körper eines Trennmediums bereitgestellt wird, in dem eine Vielzahl von Löchern ausgebildet ist, und indem ein länglicher ungesinterter Körper in jedem Loch angeordnet wird.

8. Ein Verfahren nach Anspruch 7, wobei die Löcher in dem Körper parallel zueinander vorliegen.

9. Ein Verfahren nach einem der Ansprüche 5 bis 8, wobei die Zusammensetzung durch eine Form mit sich verringerndem Querschnitt vor Schritt (3) extrudiert wird.

10. Ein Verfahren nach einem der Ansprüche 1 bis 9, wobei in Schritt (1) Komponente (a) aus der Gruppe ausgewählt wird, die besteht aus einer Masse von Diamantpartikeln und einem Precursor aus Diamant, ausgewählt aus der Gruppe, die aus Grafit und amorphem Kohlenstoff besteht, und wobei eine zweite Phase in der Mischung vorliegt.

11. Ein Verfahren nach einem der Ansprüche 1 bis 9, wobei in Schritt (1) Komponente (a) ausgewählt wird aus der Gruppe, die aus einer Masse von Partikeln aus kubischem Bornitridund einem Precursor aus kubischem Bornitrid besteht, und wobei eine zweite Phase in der Mischung vorliegt.

12. Ein Verfahren nach einem der Ansprüche 1 bis 11, wobei in Schritt (1) die Komponente (c) ein organischen Bindemittel aufweist.

13. Ein Verfahren nach einem der Ansprüche 1 bis 12, wobei das Trennmedium Kalziumkarbonat ist.

14. Ein Verfahren nach einem der Ansprüche 1 bis 13, wobei eine chemische Barriereschicht zwischen jedem länglichen ungesinterten Körper und dem Trennmedium angeordnet wird.

15. Ein Verfahren nach einem der Ansprüche 12 bis 14, wobei vor Schritt (3) ein Teil des oder das gesamte organische Bindemittel(s) entfernt wird.

16. Ein Verfahren nach einem der Ansprüche 1 bis 15, wobei in Schritt (3) die Bedingungen erhöhter Temperatur und Druck einen Druck von 1 bis 7 GPa einschließlich und eine Temperatur von 1000°C bis 1700°C einschließlich umfassen.

## Revendications

1. Procédé pour produire une pluralité de corps abrasifs polycristallins allongés comprenant chacun une masse de particules abrasives ultradures liées en une forme cohérente, comprenant les étapes consistant à :
(1) mettre à disposition un mélange de :
(a) une masse de particules abrasives ultradures ou d'un précurseur de telles particules, dans laquelle les particules abrasives ultradures sont choisies dans le groupe constitué par le diamant et le nitrure de bore cubique,
(b) éventuellement une deuxième phase ; et
(c) un agent de formation de pâte ;
le mélange ayant une consistance analogue à une pâte ;
(2) mettre le mélange sous la forme d'un ensemble comprenant une pluralité de corps allongés non frittés, chaque corps allongé non fritté étant séparé de ses voisins par un milieu de séparation, le milieu de séparation étant choisi dans le groupe constitué par une poudre métallique, le sel, le graphite, le nitrure de bore hexagonal, un carbonate, et un oxyde ;
(3) placer l'ensemble de l'étape (2) dans une zone réactionnelle d'un dispositif à température élevée et sous pression élevée, et soumettre le produit de l'étape (2) à des conditions élevées de température et de pression auxquelles les particules abrasives ultradures sont cristallographiquement stables pour fritter les corps allongés non frittés ; et
(4) récupérer les corps abrasifs polycristallins allongés à partir du milieu de séparation.

2. Procédé selon la revendication 1, dans lequel, dans l'étape (2), chaque corps allongé non fritté est formé par extrusion.

3. Procédé selon la revendication 2, dans lequel, dans l'étape (2), le milieu de séparation est coextrudé avec le mélange lors de la production de chaque corps allongé non fritté.

4. Procédé selon la revendication 2 ou la revendication 13, dans lequel, dans l'étape (2), l'extrusion ou la coextrusion a lieu à travers une filière ayant une section transversale décroissante.

5. Procédé selon l'une quelconque des revendications 1 à 4, dans lequel l'ensemble est formé par mise en faisceau d'une pluralité de corps allongés non frittés.

6. Procédé selon la revendication 15, dans lequel les corps allongés non frittés sont parallèles les uns aux autres.

7. Procédé selon l'une quelconque des revendications 1 à 4, dans lequel l'ensemble dans l'étape (2) est formé par les opérations consistant à disposer d'un corps de milieu de séparation ayant une pluralité de trous formés dans celui-ci et à placer un corps allongé non fritté dans chaque trou.

8. Procédé selon la revendication 7, dans lequel les trous dans le corps sont parallèles les uns aux autres.

9. Procédé selon l'une quelconque des revendications 5 à 8, dans lequel l'ensemble est extrudé à travers une filière ayant une section transversale décroissante avant l'étape (3).

10. Procédé selon l'une quelconque des revendications 1 à 9, dans lequel, dans l'étape (1), le composant (a) est choisi dans le groupe constitué par une masse de particules de diamant et un précurseur de diamant choisi dans le groupe constitué par le graphite et le carbone amorphe et une deuxième phase est présente dans le mélange.

11. Procédé selon l'une quelconque des revendications 1 à 9, dans lequel, dans l'étape (1), le composant (a) est choisi dans le groupe constitué par une masse de particules de nitrure de bore cubique et un précurseur de nitrure de bore cubique et une deuxième phase est présente dans le mélange.

12. Procédé selon l'une quelconque des revendications 1 à 11, dans lequel, dans l'étape (1), le composant (c) comprend un liant organique.

13. Procédé selon l'une quelconque des revendications 1 à 12, dans lequel le milieu de séparation est le carbonate de calcium.

14. Procédé selon l'une quelconque des revendications 1 à 13, dans lequel une couche de barrière chimique est placée entre chaque corps allongé non fritté et le milieu de séparation.

15. Procédé selon l'une quelconque des revendications 12 à 14, dans lequel, avant l'étape (3), tout ou partie du liant organique est éliminé.

16. Procédé selon l'une quelconque des revendications 1 à 15, dans lequel, dans l'étape (3), les conditions élevées de température et de pression comprennent une pression de 3 à 7 GPa, bornes comprises, et une température de 1000°C à 1700°C, bornes comprises.
